# FASCICULE DE BREVET EUROPEEN

(11) **EP 3 275 579 B1**
(45) Date de publication et mention de la délivrance du brevet: **29.03.2023**
(21) Numéro de dépôt: 17183049.0
(22) Date de dépôt: 25.07.2017
(51) Int. Cl.: B23B 47/00, B23Q 5/32, B23Q 5/40, B23Q 15/14

(54) **DISPOSITIF DE PERÇAGE À VITESSE D'AVANCE AUTOMATIQUE OU CONTRÔLÉE À BROCHE AUTO ALIGNANTE**
SCHNELLBOHRVORRICHTUNG MIT AUTOMATISCHEM ODER KONTROLLIERTEM VORSCHUB MIT SELBSTAUSRICHTENDER BOHRSPINDEL
DRILLING DEVICE WITH ADVANCING SPEED CONTROLLED AUTOMATICALLY OR BY A SELF-ALIGNING SPINDLE

(30) Priorité: 29.07.2016 FR 1657425
(43) Date de publication de la demande: 31.01.2018
(73) Titulaire: Seti-Tec, 77185 Lognes (FR)
(72) Inventeur: PEREIRA, Sébastien, 94210 Saint Maur des Fosses (FR)
(74) Mandataire: Vidon Brevets & Stratégie

(56) Documents cités:
- EP-A1- 0 187 409
- WO-A1-2014/054802
- WO-A1-2016/102392

## Description

### 1. Domaine de l'invention

Le domaine de l'invention est celui de la conception et de la fabrication des dispositifs de perçage plus communément appelés perceuses.

L'invention concerne un dispositif de perçage ou perceuse à vitesse d'avance automatique ou contrôlée selon le préambule de la revendication 1 ainsi qu'un module de perçage amovible. Un tel dispositif de perçage et un tel module de perçage amovible sont connus de EP 0 187 409 A1.

### 2. Art antérieur

On connaît des perceuses dont la broche de perçage, qui est destinée à entrainer en mouvement un outil de coupe comme un foret, peut être simultanément entrainée en rotation et en translation selon un même axe pour réaliser une opération de perçage. Au rang de ces perceuses figurent d'une part les perceuses à vitesse d'avance automatique et d'autre part les perceuses à vitesse d'avance contrôlée.

Les perceuses à vitesse d'avance automatique comprennent un unique moteur qui permet à la fois d'entrainer la broche de perçage en rotation et en translation selon un même axe. Il n'est alors pas possible de faire varier d'une part la fréquence de rotation et d'autre part la vitesse d'avance de la broche de perçage.

Les perceuses à vitesse d'avance contrôlée comprennent un moteur de mise en rotation qui permet d'animer d'un mouvement de rotation la broche de perçage, et un moteur d'avance qui permet d'animer d'un mouvement d'avance la broche de perçage (mise en translation selon son axe de rotation). Il est ainsi possible de faire varier d'une part la fréquence de rotation et d'autre part la vitesse d'avance de la broche de perçage.

Ces perceuses sont mises en oeuvre dans certains domaines industriels, notamment dans l'industrie aéronautique au cours de la fabrication d'avions.

Les avions comprennent un fuselage, logeant l'habitacle, qui assure la liaison entre les ailes et l'empennage.

Le fuselage comprend généralement un squelette constitué d'une pluralité de cadres liés entre eux au moyen de lisses et de longerons. Des panneaux sont solidarisés autour du squelette par exemple par vissage ou rivetage.

Au cours de la construction d'un avion, les panneaux sont rapportés autour du squelette en vue d'y être solidarisés. Préalablement à leur solidarisation, des perçages doivent être ménagés à travers les panneaux et le squelette pour permettre le passage des éléments de fixation assurant leur solidarisation.

Ces perçages sont réalisés au cours de phases de contreperçage qui consistent à percer, lors d'une même opération, à la fois les panneaux et les éléments de squelette auxquels ils doivent être fixés.

Dans ce but, des grilles de perçage sont rapportées à proximité de l'ensemble constitué du squelette et des panneaux à assembler. Ces grilles de perçages, qui sont traversées par une pluralité de trous de perçage, forment ainsi en quelque sorte un gabarit de perçage. Pour assurer le perçage d'un trou au niveau d'un trou de perçage de la grille, une perceuse à vitesse d'avance contrôlée est solidarisée au niveau de ce trou par des moyens de solidarisation prévus à cet effet, comme par exemple des collets expansibles.

Au cours d'une opération de contreperçage, la perceuse à vitesse d'avance contrôlée est mise en oeuvre de telle sorte que la broche de perçage, et l'outil de coupe qui en est solidaire, soient simultanément entrainés en rotation et en translation selon un même axe. L'outil de coupe perce alors le panneau puis l'élément de squelette correspondant, ou inversement selon que la grille de perçage et la perceuse sont situées du côté intérieur ou extérieur au fuselage. Des moyens de retour automatique de la broche de perçage sont mis en oeuvre de manière à ce que l'outil de coupe soit extrait du perçage réalisé et ramené dans sa position initiale en fin de cycle de contreperçage.

Pour réaliser un nouveau perçage, la perceuse doit être déplacée manuellement au trou de perçage correspondant de la grille de perçage. La perceuse est ainsi déplacée manuellement par un opérateur entre chaque perçage.

La mise en oeuvre des grilles de perçages et des moyens de fixation de la perceuse à celle-ci permet d'une part de réaliser un positionnement précis de la perceuse par rapport à la structure à percer et d'autre part d'assurer un maintien rigide de la perceuse pendant chaque perçage. On garantit ainsi une bonne précision du trou réalisé.

Le déplacement manuel de la perceuse après chaque perçage est une opération longue et fastidieuse pour l'opérateur qui en a la charge. Elle tant en conséquence à nuire à la productivité.

Dans le souci d'améliorer la productivité et la flexibilité des moyens de production, en particulier de l'industrie aéronautique, on a substitué à l'utilisation des grilles de perçages celle de robots de perçage pour assurer le maintien en position de la perceuse en cours de perçage et pour déplacer la perceuse entre chaque perçage.

Un robot de perçage comprend un bras manipulateur à l'extrémité duquel est fixée une perceuse à vitesse d'avance contrôlée.

Les organes de motorisation, de transmission et de mesure classiquement mis en oeuvre au sein d'une perceuse à vitesse d'avance contrôlée constituent un ensemble standard appelé effecteur.

Un module de perçage amovible, comprenant la broche de perçage, l'outil coupant ainsi que les éléments spécifiques à celui-ci tels que par exemple les moyens de fixation de l'outil à la broche de perçage, les éléments de transmission avec les rapports de réduction ad' hoc en matière de fréquence de rotation et de vitesse d'avance, et une mémoire contenant des données propres à l'outil (durée de vie, vitesse de coupe, vitesse d'avance, ...) est solidarisable de manière réversible à l'effecteur.

La fixation et le réglage de l'outil coupant sur un tel module sont généralement réalisés par le département outil d'une usine. Ces modules de perçage munis de leur outil coupant peuvent être stockés dans un magasin accessible au robot dans lequel il peut puiser pour changer de façon automatique de module de perçage afin de réaliser les opérations de perçage qui lui sont assignées.

Les tolérances dimensionnelles des perçages sont généralement très faibles, notamment en ce qui concerne la perpendicularité des perçages par rapport à la surface de la pièce à percer. Le défaut de perpendicularité de l'axe d'un perçage par rapport à la surface percée ne doit en général pas excéder 0.5°.

Le robot doit en conséquence parfaitement bien placer la perceuse par rapport à la surface à percer afin que l'axe de la broche de perçage soit orienté par rapport à la surface à percer de manière telle que les tolérances dimensionnelles des perçages soient respectées.

Dans le but d'assurer une mise en position convenable par le robot de la perceuse par rapport à la surface à percer, le robot prend en compte une représentation virtuelle, du type modèle CAO, de la structure à percer. Sur la base d'une telle représentation, il est commandé pour positionner à chaque perçage la perceuse à l'emplacement théorique où elle doit se situer pour réaliser le perçage.

Toutefois, il existe des différences dimensionnelles entre le modèle virtuel, qui n'est qu'une représentation théorique de la réalité, et la structure réelle à percer.

La seule prise en considération d'un tel modèle virtuel pour assurer le positionnement de la perceuse par le robot ne permet en conséquence pas l'obtention d'un positionnement suffisamment précis pour respecter les tolérances dimensionnelles, en particulier en matière de perpendicularité.

Afin de pallier ce problème, il est nécessaire de corriger le positionnement théorique de la perceuse basé sur I modèle virtuel.

Plusieurs solutions ont été développées pour procéder à une telle correction de position.

Une première solution, dite correction par reconnaissance de surface, consiste à :
- évaluer le défaut de perpendicularité de la broche de perçage par rapport à la surface à percer : cette évaluation peut par exemple consister à balayer la surface réelle à percer au moyen de trois capteurs lasers, positionnés en trois points avec un écart de 120° autour du corps de l'effecteur, qui sont capables de mesurer la distance entre chacun de ces trois capteurs et la surface à percer pour reconstruire cette surface et à calculer le défaut de perpendicularité entre cette surface reconstruite et l'axe de la broche de perçage ;
- à transmettre au boitier de commande du robot le défaut de perpendicularité préalablement calculé ;
- à commander le robot en fonction du défaut calculé afin de repositionner la broche de perçage par rapport à la surface à percer de telle manière que les tolérances dimensionnelles de perpendicularité soient respectées.

Une fois la correction de positionnement achevée, le cycle de perçage peut être mise en oeuvre.

Une telle correction est bien entendu réalisée préalablement à chaque perçage.

Une correction par reconnaissance de surface procure des résultats satisfaisants en terme de précision en ce qu'elle conduit au respect des tolérances dimensionnelles. Elle est toutefois relativement longue à mettre en oeuvre et pénalise en conséquence la productivité, ce qui n'est généralement pas admis sur le plan industriel.

Une deuxième solution, dite correction par auto-alignement, consiste à conférer à l'effecteur, auquel est solidarisé le module de perçage logeant la broche de perçage, un peu de liberté de rotulage par rapport au bras du robot selon l'axe de rotation de la broche et à munir la perceuse d'une surface d'appui, perpendiculaire à l'axe de la broche de perçage, destinée à venir en appui contre la surface à percer.

Lorsque le robot déplace la perceuse en direction de la pièce à percer, et que la surface d'appui vient en contact avec la surface à percer et se plaque contre celle-ci, alors l'effecteur logeant la broche de perçage pivote autour de l'axe de la liaison rotule qui le lie au bras robot pour prendre une orientation telle que l'axe de la broche de perçage soit perpendiculaire à la surface à percer. Cette correction est donc faite dans la limite de la liberté de rotulage qui peut être de quelques degrés pour compenser l'imprécision du positionnement théorique par le robot.

L'avantage de cette correction par auto-alignement réside en un gain de temps car les phases de mesure, calcul et repositionnement du robot inhérentes à la première solution par reconnaissance de surface sont évitées, le positionnement correct de la broche étant obtenu de façon immédiate lors du déplacement du robot contre la pièce à percer pendant le cycle de perçage.

L'inconvénient de cette correction par auto-alignement tient au fait que, compte tenu du poids de l'effecteur et des vibrations auxquelles il est soumis, l'effort généré par le robot pour plaquer la surface d'appui contre surface à percer et réaligner l'axe de la broche par rapport à la surface à percer, doit être relativement important pour garantir que l'axe de la broche s'étend bien perpendiculairement à la surface à percer.

En effet, l'exercice d'un tel effort risque d'engendrer un marquage de la pièce à percer par la surface d'appui voire une déformation de la pièce à percer, ce qui n'est bien entendu pas admis.

### 3. Objectifs de l'invention

L'invention a notamment pour objectif d'apporter une solution efficace à au moins certains de ces différents problèmes.

En particulier, selon au moins un mode de réalisation, un objectif de l'invention est de fournir un dispositif de perçage dont la broche de perçage puisse être facilement et rapidement alignée de manière fiable par rapport à la surface d'attaque d'une pièce à percer.

Un autre objectif de l'invention est, selon au moins un mode de réalisation, de fournir un tel dispositif de perçage qui permette d'assurer un auto alignement de la broche de perçage tout en limitant le risque de marquer la pièce à percer.

### 4. Présentation de l'invention

Pour ceci, l'invention propose un dispositif de perçage à avance automatique ou contrôlée selon la revendication 1 comprenant un carter logeant une broche de perçage destinée à entrainer en mouvement un outil de coupe pour percer une pièce comprenant une surface d'attaque.

Selon l'invention, ladite broche est inclinable à l'intérieur dudit carter par rapport à l'axe dudit carter, et ledit dispositif comprend des moyens d'auto alignement de ladite broche par rapport à ladite surface d'attaque, lesdits moyens d'auto alignement déplaçant ladite broche dans une position dans laquelle son axe est essentiellement perpendiculaire à ladite surface d'attaque sous l'effet d'une application d'un effort de poussée dudit dispositif de perçage contre ladite surface d'attaque essentiellement selon l'axe dudit carter.

Il est rappelé qu'avant que l'effort de poussée du dispositif de perçage contre la surface d'attaque ne soit exercé, le dispositif de perçage aura été positionné par le robot en face de l'emplacement du trou à percer de telle sorte que l'axe de son carter soit perpendiculaire par rapport à la surface d'attaque, ceci dans la limite des différences entre le modèle CAO et les composants réels (pièce à percer, perceuse, robot, positionnement relatif de ces composants entre eux), ainsi que la limite de précision de mouvement du robot.

L'invention repose sur une approche originale qui consiste à mettre en oeuvre une broche de perçage inclinable par rapport au carter du dispositif de perçage et des moyens d'auto alignement de la broche par rapport à la surface d'attaque de la pièce à percer de telle sorte que, après que le dispositif de perçage a été placé au niveau du trou à percer, la broche se déplace dans une position dans laquelle son axe est essentiellement perpendiculaire à la surface d'attaque lorsque l'on exerce un effort de poussée du dispositif de perçage contre la surface d'attaque essentiellement selon l'axe du carter (en d'autre terme selon un axe essentiellement perpendiculaire à la surface d'attaque).

On entend par essentiellement perpendiculaire que la perpendicularité de la broche se situe dans un intervalle de tolérances prédéterminé requis, par exemple de l'ordre de +/- 1,5° environ.

Selon l'invention, la perceuse n'est pas inclinable dans son ensemble par rapport au bras robot. C'est seulement la broche de perçage qui est inclinable à l'intérieur du carter de la perceuse. La masse des pièces à déplacer pour obtenir un auto alignement de la broche est donc largement inférieure selon l'invention comparativement à la technique d'auto alignement de l'art antérieur.

L'effort de poussée nécessaire à l'auto alignement de la broche étant d'autant plus faible que la masse des pièces à déplacer à cette effet est faible, la technique selon l'invention permet d'obtenir un auto alignement satisfaisant en appliquant un effort de poussé réduit.

Le fait de devoir générer un effort de poussée réduit pour aligner la broche permet également de réduire de risque de marquage de la pièce à percer comparativement à la technique de correction de position par auto alignement de l'art antérieur.

La technique selon l'invention ne présente donc pas les inconvénients des techniques de correction de position par reconnaissance de surface : non mise en oeuvre de moyens de mesure et de calcul lents et complexes.

La technique selon l'invention permet ainsi d'obtenir de manière simple, fiable, rapide et sans risque de marquage de la pièce à percer, un auto alignement de la broche par rapport à la surface d'attaque de la pièce à percer.

Selon une caractéristique possible de l'invention, ladite broche de perçage est reliée audit carter au moyen d'une liaison rotule.

Il est ainsi possible d'incliner facilement la broche dans le carter en la faisant pivoter autour du centre de la liaison pivot qui la relie au carter. Le centre de cette liaison pivot est préférentiellement situé sur l'axe de rotation de la broche de perçage.

Selon une caractéristique possible, un dispositif de perçage selon l'invention comprend des moyens d'entrainement en rotation et des moyens d'entrainement en translation de ladite broche selon son axe, lesdits moyens d'entrainement comprenant des moyens autorisant le désaxage de ladite broche par rapport audit carter.

Dans ce cas, lesdits moyens d'entrainement en rotation et lesdits moyens d'entrainement en translation peuvent comprendre chacun :
- un pignon monté mobile en rotation à l'intérieur dudit carter selon l'axe dudit carter ;
- un entraineur extérieur lié en rotation audit pignon suivant l'axe de rotation dudit pignon ;
- une bague d'excentration ;
- un entraineur intérieur lié en rotation avec ladite broche ;
la bague d'excentration étant liée en rotation audit entraineur extérieur suivant l'axe de rotation dudit pignon et mobile par rapport audit entraineur extérieur suivant une trajectoire comprise dans un premier plan passant par l'axe de rotation dudit pignon ; la bague d'excentration étant liée en rotation audit entraineur intérieur suivant l'axe de rotation de ladite broche et mobile par rapport audit entraineur intérieur suivant une trajectoire comprise dans un deuxième plan passant par l'axe de rotation de ladite broche;
les premier et deuxième plans n'étant pas parallèles.

Cette mise en oeuvre permet d'autoriser de manière simple et efficace le désaxage de la broche par rapport au carter au niveau des moyens d'entrainement en mouvement de la broche.

Dans ce cas, les premier et deuxième plans sont préférentiellement perpendiculaires.

Selon une caractéristique possible de l'invention :
- lesdits moyens d'entrainement en rotation comprennent une noix de rotation, ladite broche étant liée en rotation à ladite noix de rotation et mobile en translation par rapport à celle-ci le long de l'axe de ladite broche,
- lesdits moyens d'entrainement en translation comprennent une noix d'avance, ladite broche étant liée à ladite noix d'avance par une liaison héliocoïdale,
- ladite noix d'avance et ledit entraineur intérieur desdits moyens d'entrainement en translation étant liés en rotation ;
- ladite noix de rotation et l'entraineur intérieur desdits moyens d'entrainement en rotation étant lié en rotation.

Une mise en rotation de la noix de rotation provoque une mise en rotation de la broche de perçage. Une mise en rotation de la noix d'avance permet de contrôler la vitesse d'avance de broche de perçage.

Dans ce cas :
- ladite noix d'avance et ledit entraineur intérieur desdits moyens d'entrainement en translation peuvent former une unique pièce ;
- ladite noix de rotation et l'entraineur intérieur desdits moyens d'entrainement en rotation peuvent former une unique pièce.

Cette approche permet de simplifier l'architecture du dispositif selon l'invention en en réduisant le nombre de pièces.

Selon une variante possible :
- l'entraineur extérieur desdits moyens d'entrainement en rotation et ladite noix de rotation comprennent respectivement deux doigts intérieurs et deux doigts extérieurs diamétralement opposés, lesdits doigts intérieurs coopérant avec deux rainures extérieures de forme complémentaires ménagées dans ladite bague d'excentration de rotation, lesdits doigts extérieurs coopérant avec deux rainures intérieures de forme complémentaires ménagées dans ladite bague d'excentration de rotation ;
- l'entraineur extérieur desdits moyens d'entrainement en translation et ladite noix d'avance comprennent respectivement deux doigts intérieurs et deux doigts extérieurs diamétralement opposés, lesdits doigts intérieurs coopérant avec deux rainures extérieures de forme complémentaires ménagées dans ladite bague d'excentration d'avance, lesdits doigts extérieurs coopérant avec deux rainures intérieures de forme complémentaires ménagées dans ladite bague d'excentration d'avance.

Une telle architecture permet d'autoriser, de manière simple et efficace, l'entrainement en rotation et en translation de la broche de perçage tout en permettant son inclinaison dans le carter.

Selon une variante possible, lesdits entraineurs extérieurs et lesdits pignons correspondants desdits moyens d'entrainement en rotation et desdits moyens d'entrainement en translation forment respectivement une unique pièce.

Cette approche permet de simplifier l'architecture du dispositif selon l'invention en en réduisant le nombre de pièces.

Selon une variante possible, un dispositif de perçage selon l'invention comprend un fourreau à l'intérieur duquel ladite broche est montée mobile en translation et en rotation selon son propre axe, ledit fourreau étant inclinable à l'intérieur dudit carter et comprenant à son extrémité tournée vers l'extérieur dudit carter une surface d'appui destinée être appliquée contre ladite surface d'attaque.

Selon une variante possible, un dispositif de perçage selon l'invention comprend un module de perçage amovible solidarisable de manière réversible audit carter, ledit module de perçage comprenant au moins ladite broche et lesdits moyens d'auto alignement de ladite broche par rapport à ladite surface d'attaque.

Un tel module de perçage amovible est interchangeable selon l'opération de perçage à réaliser. Il peut contenir une mémoire avec des données propres à l'outil coupant solidarisé à la broche de perçage (état d'usage, vitesse d'avance, vitesse de coupe...) qui pourront être prises en compte par le boîtier de commande ou de contrôle de la perceuse pour piloter le perçage.

Selon une variante possible, lesdits entraineurs extérieurs et lesdits pignons correspondants desdits moyens d'entrainement en rotation et desdits moyens d'entrainement en translation sont liés en rotation suivant l'axe de rotation desdits pignons grâce à des cannelures ménagées sur lesdits pignons et lesdits entraineurs et libre en translation suivant l'axe de rotation desdits pignons.

Cette approche permet de désolidariser simplement le module de perçage de l'effecteur.

L'invention concerne également un module de perçage amovible selon la revendication 11 destiné à être solidarisé de manière réversible à un dispositif de perçage selon l'une quelconque des variante exposées ci-avant, ledit module de perçage comprenant au moins ladite broche et lesdits moyens d'auto alignement de ladite broche par rapport à ladite surface d'attaque.

### 5. Liste des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :
- la figure 1 illustre un vue de côté d'un dispositif de perçage selon l'invention placé à l'extrémité d'un bras robot ;
- la figure 2 illustre une vue en coupe longitudinale d'un dispositif de perçage selon l'invention dont l'axe de la broche est sensiblement aligné avec celui du carter de la perceuse ;
- les figures 3 et 4 illustrent des vues en coupe transversale du dispositif de perçage de la figure 2 selon les axes A-A et B-B ;
- la figure 5 illustre une vue en coupe longitudinale d'un dispositif de perçage selon l'invention sur laquelle l'axe de la broche de perçage est inclinée à l'intérieur du carter de la perceuse ;
- les figures 6 et 7 d'une part et 8 et 9 d'autre part illustrent des vues en coupe transversale du dispositif de perçage de la figure 2 selon les axes A-A et B-B avec une broche présentant diverses inclinaisons ;
- les figures 10 et 11 illustrent des vues éclatées des moyens autorisant le désaxage de la broche par rapport au carter ;
- la figure 12 illustre un module de perçage désolidarisé du reste de la perceuse.

### 6. Description de modes de réalisation particuliers

### 6.1. Architecture

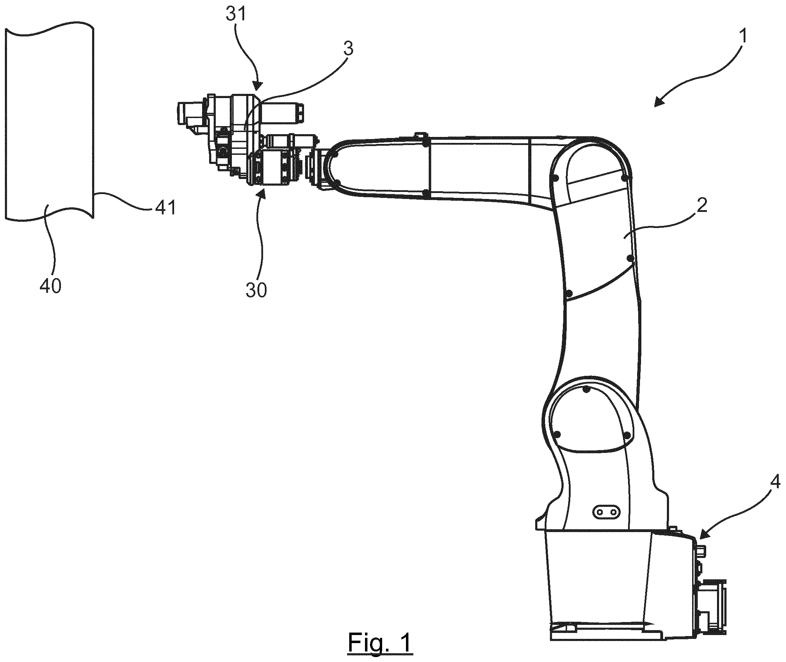

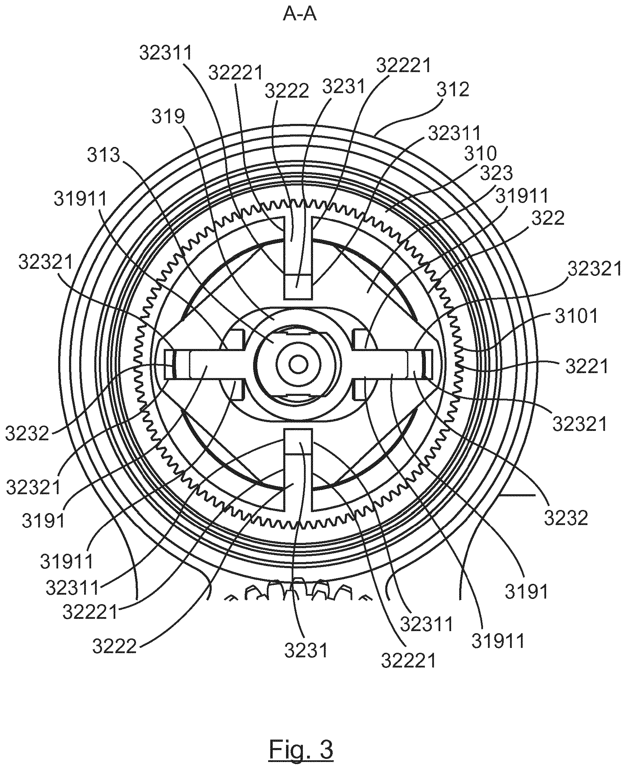

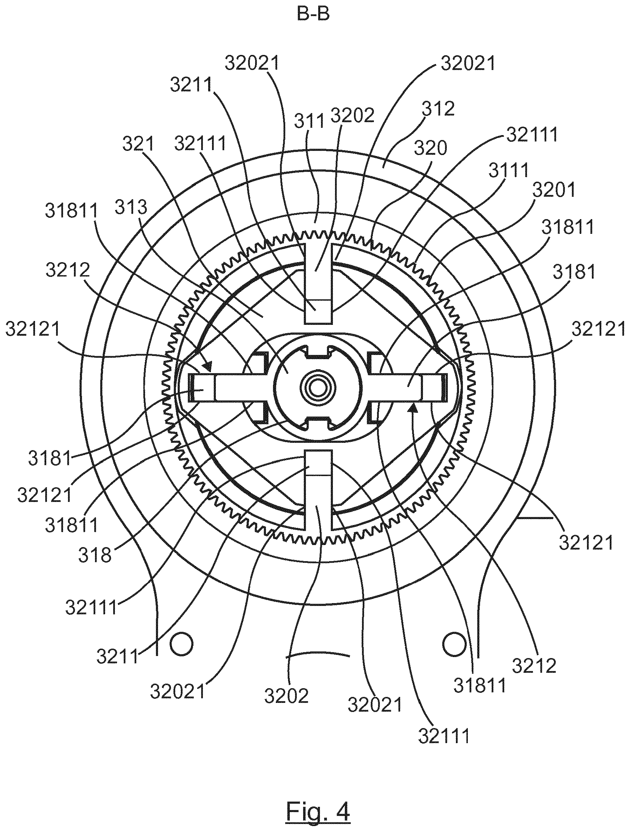

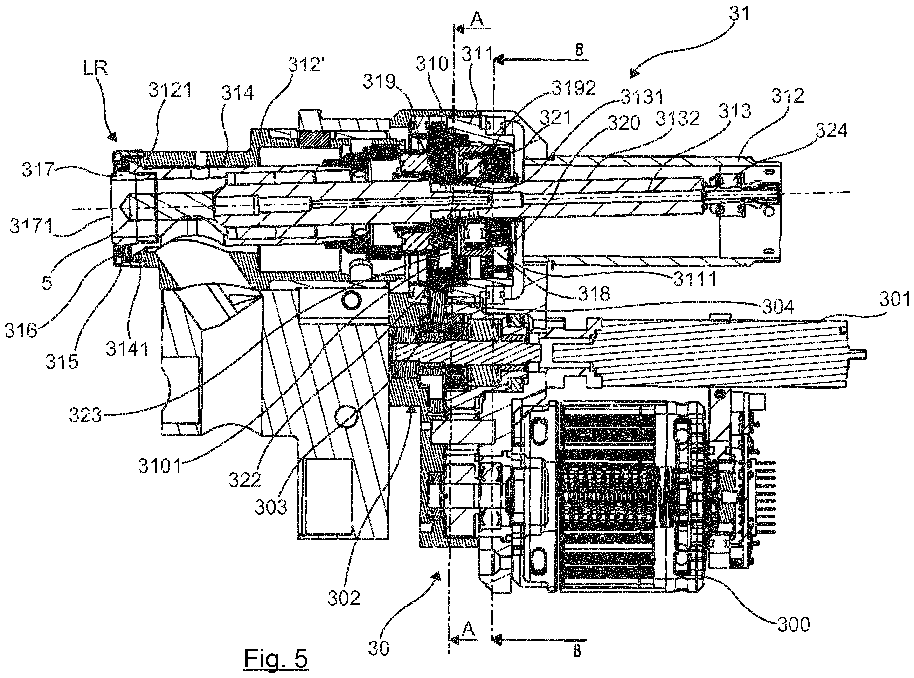

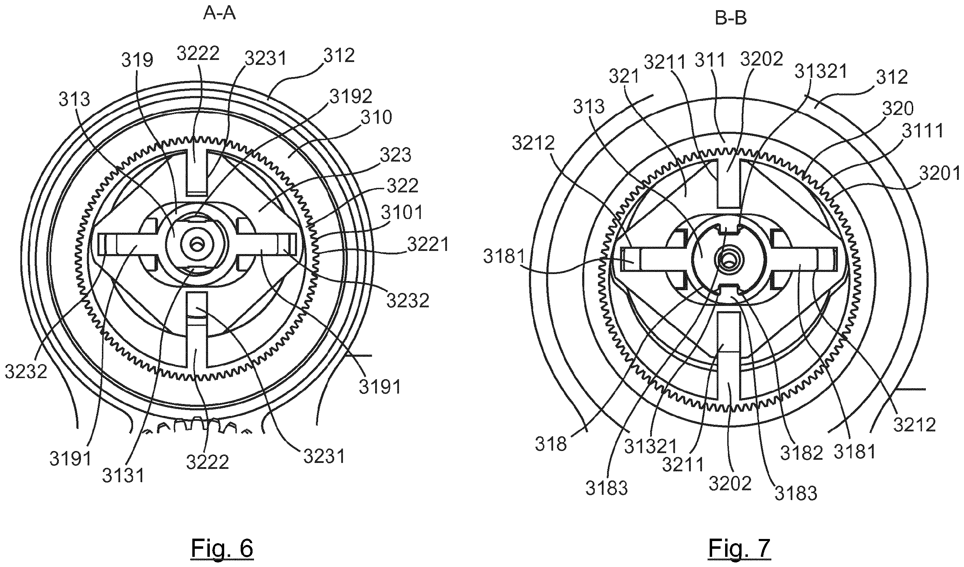

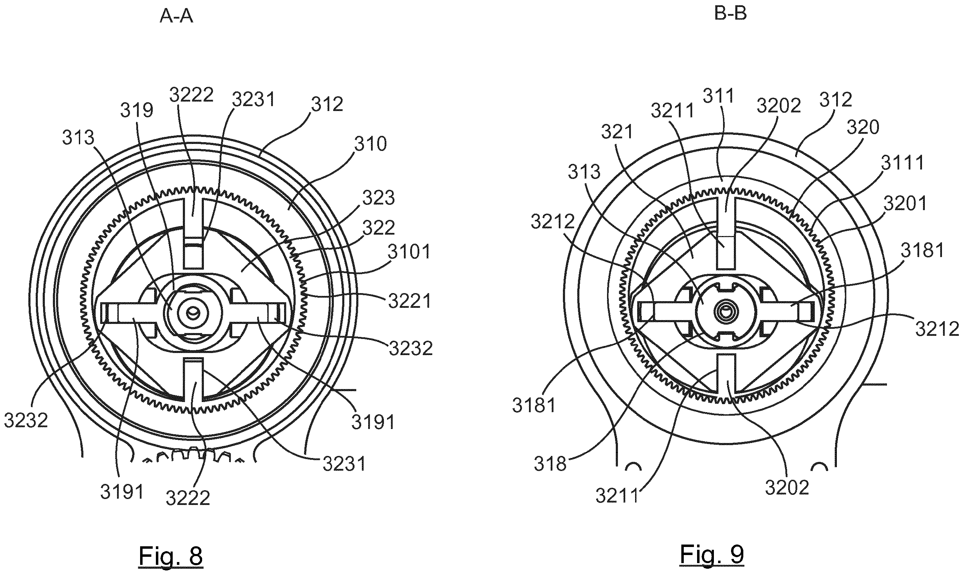

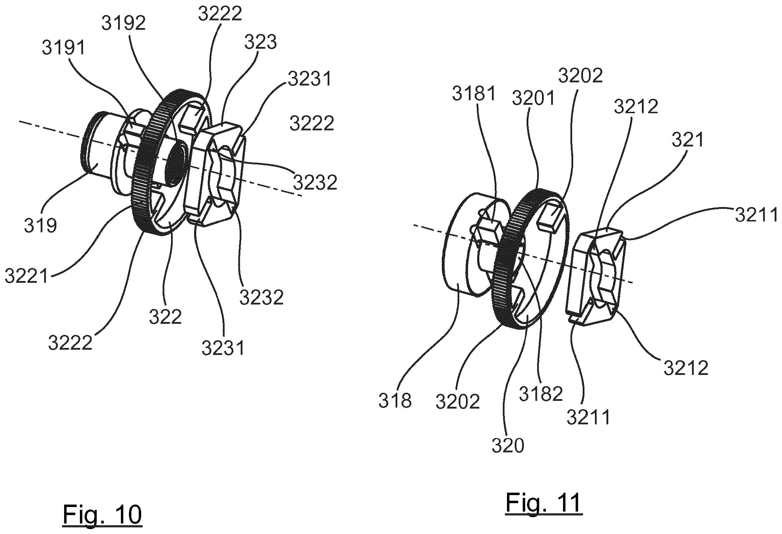

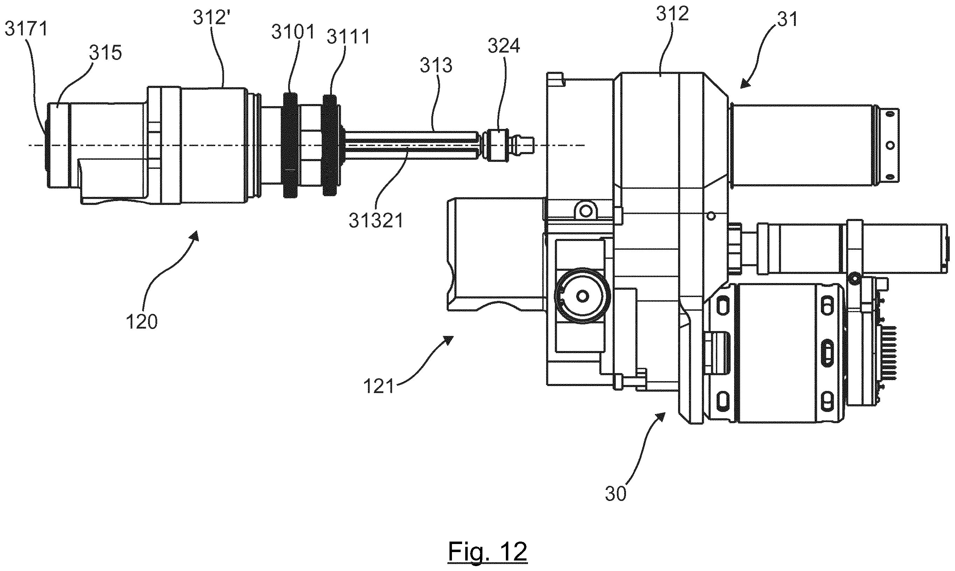

On présente en relation avec les figures 1 à 12, un exemple de dispositif de perçage à vitesse d'avance contrôlée selon l'invention.

Dans ce mode de réalisation, un tel dispositif de perçage comprend un robot de perçage 1 comprenant un bras manipulateur 2 à l'extrémité duquel est solidarisée une perceuse à vitesse d'avance contrôlée 3. Un tel robot de perçage 1 comprend classiquement un boîtier de commande 4 capable de piloter le robot. Un tel boitier de commande est connu en soit et n'est pas décrit plus en détail.

La perceuse 3 comprend un bloc de transmission 30 et un bloc de perçage 31.

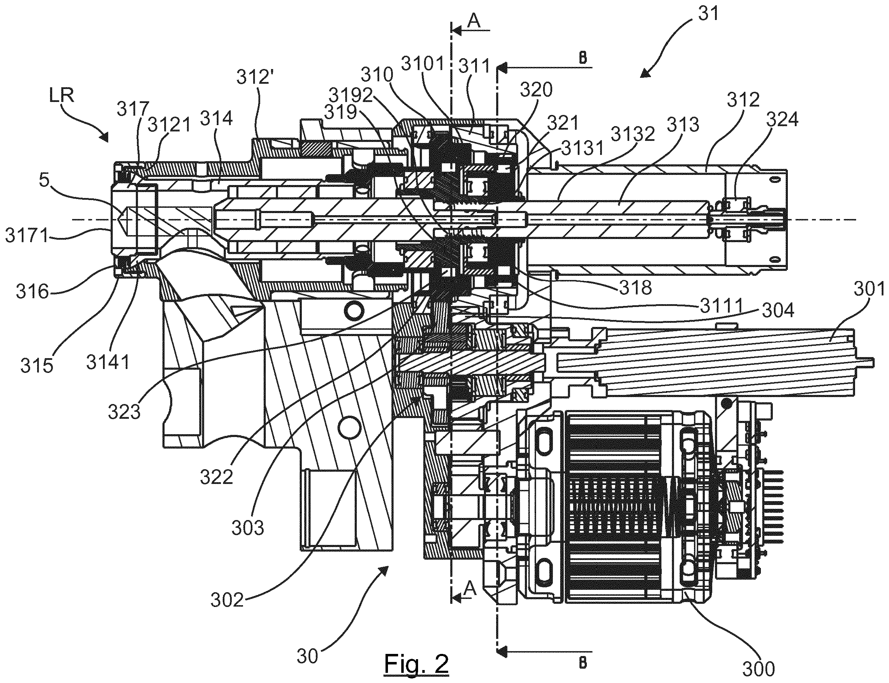

La figure 2 illustre une vue en coupe selon un plan passant par l'axe de la broche de la perceuse 3 et par les axes de transmission du bloc de transmission 30.

Le bloc de perçage 31 comprend un carter 312 qui loge une broche de perçage 313 destinée à entrainer en mouvement un outil de coupe 5, comme un foret, pour percer une pièce comprenant une surface d'attaque. Le dispositif comprend des moyens de solidarisation d'un outil coupant à l'extrémité avant de la broche (non représentés).

La surface d'attaque 41 d'une pièce à percer 40 est la surface de celle-ci avec laquelle l'outil de coupe entre en premier en contact au cours d'une opération de perçage.

La broche de perçage 313 est montée mobile en rotation et en translation selon son axe longitudinal à l'intérieur du carter 312. Elle est également montée inclinable à l'intérieur du carter 312 par rapport à l'axe longitudinal du carter 312, ou à tout le moins de la partie de celui-ci qui loge la broche de perçage 313.

Comme il ressortira plus clairement par la suite, la perceuse comprend des moyens d'auto alignement de la broche de perçage 313 par rapport à la surface d'attaque, ces moyens d'auto alignement déplaçant la broche de perçage 313 dans une position dans laquelle son axe est essentiellement perpendiculaire à la surface d'attaque sous l'effet d'une application d'un effort consistant à pousser la perceuse contre la surface d'attaque essentiellement selon l'axe du carter 312.

Pour être inclinable dans le carter 312, la broche de perçage 313 est montée mobile en rotation et en translation selon son axe longitudinal à l'intérieur d'un fourreau 314, ce fourreau 314 étant quant à lui relié, à son extrémité avant, au carter 312 par une liaison rotule LR dont le centre est sur l'axe de la broche de perçage 313. Cette rotule autorise dans ce mode de réalisation une inclinaison de la broche 313 par rapport au carter de l'ordre de +/- 1,5° environ.

L'extrémité avant du fourreau 314 comprend une surface périphérique mâle en portion de sphère 3141 et le carter 312 comprend un logement femelle 3121 présentant une surface intérieure de forme complémentaire dans lequel l'extrémité du fourreau 314 est placée. L'extrémité avant du fourreau 314 est maintenue dans le logement 3121 du carter 312 au moyen d'un écrou 315, et de rondelles élastiques 316, interposées entre l'écrou 315 et l'extrémité avant du fourreau 314.

Une pièce d'appui 317 est solidarisée à l'extrémité avant du fourreau 314 par exemple par vissage. Cette pièce d'appui 317 comprend une surface d'appui 3171, qui est perpendiculaire à l'axe longitudinal de la broche de perçage 313. Cette surface d'appui 3171 forme saillie à l'extrémité avant du carter 312. En d'autres termes, elle dépasse de l'extrémité avant du carter 312. Comme il sera expliqué plus en détail par la suite, cette surface d'appui 3171 est destinée à venir en appui contre la surface d'attaque d'une pièce à percer au cours d'une phase de perçage. La pièce d'appui 317 sera préférentiellement réalisée dans un matériau suffisamment tendre pour ne pas marquer la pièce à percer et suffisamment dur pour ne pas agglomérer de copeaux au cours de perçage qui pourraient ultérieurement marquer la pièce à percer. Il pourra notamment s'agir d'un alliage d'aluminium.

La perceuse comprend des moyens d'entrainement en rotation de la broche de perçage 313 et des moyens d'entrainement en translation de la broche de perçage 313 selon l'axe longitudinale de celle-ci.

Pour autoriser une inclinaison de la broche à l'intérieur du carter, ces moyens d'entrainement en rotation et en translation comprenant, comme il ressortira plus clairement de la suite de la description, des moyens autorisant le désaxage de la broche de perçage par rapport au carter 312.

Les moyens d'entrainement en rotation comprennent une noix de rotation 318. La broche 313 est liée en rotation à la noix de rotation 318 et mobile en translation par rapport à celle-ci le long de l'axe de la broche de perçage 313.

Pour cela, une portion rainurée 3132, dont les rainures 31321 s'étendent selon l'axe longitudinal de la broche de perçage 313, est ménagée sur la broche de perçage 313. La noix de rotation 318 comprend un passage intérieur 3182 dont le contour, qui comprend des rainures 3183, présente une forme complémentaire du contour extérieur de la portion rainurée 3132 de la broche de perçage 313. L'assemblage de la noix de rotation 318 et de la portion rainurée 3132 est glissant.

Les moyens d'entrainement en translation comprennent une noix d'avance 319. La broche de perçage 313 est liée à la noix d'avance 319 par une liaison héliocoïdale. Pour cela, la broche de perçage 313 comprend une portion filetée 3131 et la noix d'avance comprend un passage intérieur taraudé 3192 de forme complémentaire de la portion filetée 3131.

Les moyens d'entrainement en rotation comprennent également :
- un pignon de rotation 311 monté mobile en rotation à l'intérieur du carter 312 selon l'axe du carter 312 ;
- un entraineur extérieur 320 lié en rotation au pignon de rotation 311 suivant l'axe de rotation du pignon de rotation 311: pour cela, le pignon de rotation 311 comprend un passage intérieur cannelé 3111 prévu pour loger l'entraineur extérieur 320 dont le contour extérieur 3201 est cannelé et de forme complémentaire de celui du passage intérieur 3111 ;
- une bague d'excentration 321 ;
- un entraineur intérieur lié en rotation avec la broche de perçage 313 : dans ce mode de réalisation, l'entraineur intérieur et la noix de rotation 318 constituent une unique et même pièce (ils peuvent constituer deux pièces liées en rotation selon l'axe de la broche).

Cette bague d'excentration 321 est liée en rotation à l'entraineur extérieur 320 suivant l'axe de rotation du pignon de rotation 311 et mobile par rapport à l'entraineur extérieur 320 suivant une trajectoire comprise dans un premier plan essentiellement parallèle à l'axe de rotation du pignon de rotation 311.

La bague d'excentration 321 est également liée en rotation à l'entraineur intérieur (i.e. la noix de rotation 318 dans le présent mode de réalisation) suivant l'axe de rotation de la broche de rotation 313 et mobile par rapport à l'entraineur intérieur (i.e. la noix de rotation 318 dans le présent mode de réalisation) suivant une trajectoire comprise dans un deuxième plan essentiellement parallèle à l'axe de rotation de la broche de perçage 313.

Dans ce mode de réalisation, les premier et deuxième plans ne sont pas parallèles, mais sont perpendiculaires.

Les moyens d'entrainement en translation comprennent également :
- un pignon de translation 310 monté mobile en rotation à l'intérieur du carter 312 selon l'axe du carter 312 ;
- un entraineur extérieur 322 lié en rotation au pignon de translation 310 suivant l'axe de rotation du pignon de translation 310 : pour cela, le pignon de translation 310 comprend un passage intérieur cannelé 3101 prévu pour loger l'entraineur extérieur 322 dont le contour extérieur 3221 est cannelé et de forme complémentaire de celui du passage intérieur 3101 (dans une variante, ils pourraient être liés par un encastrement ou former une unique pièce) ;
- une bague d'excentration 323 ;
- un entraineur intérieur lié en rotation avec la broche de perçage 313 : dans ce mode de réalisation, l'entraineur intérieur et la noix de translation 319 constituent une unique et même pièce (ils peuvent constituer deux pièces liées en rotation selon l'axe de la broche).

Cette bague d'excentration 323 est liée en rotation à l'entraineur extérieur 322 suivant l'axe de rotation du pignon de translation 310 et mobile par rapport à l'entraineur extérieur 322 suivant une trajectoire comprise dans un premier plan essentiellement parallèle à l'axe de rotation du pignon de translation.

La bague d'excentration 323 est liée en rotation à l'entraineur intérieur (i.e. la noix de translation 319 dans le présent mode de réalisation) suivant l'axe de rotation de la broche de perçage 313 et mobile par rapport à l'entraineur intérieur (i.e. la noix de translation 319 dans le présent mode de réalisation) suivant une trajectoire comprise dans un deuxième plan essentiellement parallèle à l'axe de rotation de la broche de perçage 313.

Dans ce mode de réalisation, les premier et deuxième plans ne sont pas parallèles, mais sont perpendiculaires.

L'entraineur extérieur 320 des moyens d'entrainement en rotation et la noix de rotation 318 comprennent respectivement deux doigts intérieurs 3202 et deux doigts extérieurs 3181 diamétralement opposés. Les doigts intérieurs 3202 coopèrent avec deux rainures extérieures 3211 de forme complémentaires ménagées dans la bague d'excentration de rotation 321. Les doigts extérieurs 3181 coopèrent avec deux rainures intérieures 3212 de forme complémentaires ménagées dans ladite bague d'excentration de rotation 321.

Les rainures extérieures 3211 comprennent deux surfaces de guidage opposées 32111 qui s'étendent dans des plans essentiellement parallèles à l'axe de rotation du pignon de rotation 311.

Les doigts intérieurs 3202 comprennent deux surfaces de guidage opposées 32021 qui s'étendent dans des plans essentiellement parallèles à l'axe de rotation du pignon de rotation 311.

Les rainures intérieures 3212 comprennent deux surfaces de guidages opposées 32121 qui s'étendent dans des plans essentiellement parallèles à l'axe de rotation de la broche de perçage 313.

Les doigts extérieurs 3181 comprennent deux surfaces de guidages opposées 31811 qui s'étendent dans des plans essentiellement parallèles à l'axe de rotation de la broche de perçage 313.

Les rainures 3211 peuvent se déplacer par rapport aux doigts 3202 dans un plan parallèle à leurs surfaces de guidage respectives. Les rainures 3211 et les doigts 3202 lient en rotation l'entraineur extérieur 320 à la bague d'excentration 321. Les doigts 3181 peuvent se déplacer dans les rainures 3212 dans un plan parallèle à leurs surfaces de guidage respectives. Les rainures 3212 et les doigts 3181 lient en rotation l'entraineur intérieur 318 à la bague d'excentration 321.

L'entraineur extérieur 322 des moyens d'entrainement en translation et la noix d'avance 319 comprennent respectivement deux doigts intérieurs 3222 et deux doigts extérieurs 3191 diamétralement opposés. Les doigts intérieurs 3222 coopèrent avec deux rainures extérieures 3231 de forme complémentaires ménagées dans la bague d'excentration d'avance 323. Les doigts extérieurs 3191 coopèrent avec deux rainures intérieures 3232 de forme complémentaires ménagées dans la bague d'excentration d'avance 323.

Les rainures extérieures 3231 comprennent deux surfaces de guidage opposées 32311 qui s'étendent dans des plans essentiellement parallèles à l'axe de rotation du pignon de translation 310.

Les doigts intérieurs 3222 comprennent deux surfaces de guidage opposées 32221 qui s'étendent dans des plans essentiellement parallèles à l'axe de rotation du pignon de translation 310.

Les rainures intérieures 3232 comprennent deux surfaces de guidages opposées 32321 qui s'étendent dans des plans essentiellement parallèles à l'axe de rotation de la broche de perçage 313.

Les doigts extérieurs 3191 comprennent deux surfaces de guidages opposées 31911 qui s'étendent dans des plans essentiellement parallèles à l'axe de rotation de la broche de perçage 313.

Les rainures 3231 peuvent se déplacer par rapport aux doigts 3222 dans un plan parallèle à leurs surfaces de guidage respectives. Les rainures 3231 et les doigts 3222 lient en rotation l'entraineur extérieur 322 à la bague d'excentration 323. Les doigts 3191 peuvent se déplacer dans les rainures 3232 dans un plan parallèle à leurs surfaces de guidage respectives. Les rainures 3232 et les doigts 3191 lient en rotation l'entraineur intérieur 319 à la bague d'excentration 323.

Les premier et deuxième plans des moyens d'entrainement en rotation ne sont pas nécessairement identiques aux premier et deuxième plans des moyens d'entrainement en translation.

La perceuse comprend une butée réglable 324pour régler la profondeur de perçage.

Dans ce mode de réalisation, le fourreau 314 est solidaire d'une portion de carter 312' amovible désolidarisable du reste du carter 312.

L'ensemble formé par le carter 312', le fourreau 314, la pièce d'appuis 317, la broche de perçage 313, la butée 324, les noix de rotation 318 et d'avance 319, les entraineur intérieurs, les bagues d'excentration 321, 323 et les entraineurs extérieurs 320, 322 forme un module de perçage amovible 120 solidarisable de manière réversible au reste de la perceuse 121, et interchangeable. Les cannelures des entraineurs extérieurs permettront un assemblage aisé du module de perçage au reste de la perceuse. Ces cannelures pourront être biseautées pour faciliter encore davantage la mise en place. Un système de pilotage des moteurs d'avance et de rotation pour permettre un mouvement alterné des pignons d'avance et de rotation lors de la mise en place du module de perçage facilitera la mise en place du module.

Des moyens de solidarisation réversible permettent de fixer de manière détachable le module de perçage au reste de la perceuse.

Dans une variante, aucun module de perçage amovible n'est mis en oeuvre, les composants de celui-ci étant intégrés à la perceuse de manière non amovible. Dans ce cas, le pignon de rotation et le pignon d'avance peuvent former une unique pièce avec l'entraineur extérieur correspondant.

Le bloc de transmission 30 est du type des blocs de transmission classiquement mis en oeuvre au sein d'une perceuse à vitesse d'avance contrôlée. Il peut notamment d'agir d'un bloc de transmission du type de celui qui est décrit dans la demande de brevet FR 3 000 693. Un tel bloc de transmission 30 comprend classiquement un moteur de mise en rotation 300, un moteur d'avance 301 dont les arbres sont reliés à une transmission 302 qui comprend notamment un premier pignon de sortie 303 et un deuxième pignons de sortie 304.

Le pignon d'avance 310 engrène avec le premier pignon de sortie 303 du bloc de transmission 30 alors que le pignon de rotation 311 engrène avec le deuxième pignon de sortie 304 du bloc de transmission 30.

Dans le mode de réalisation décrit ici, les axes du moteur d'avance 301 et du moteur de mise en rotation 300 sont parallèles à la broche de perçage. Dans des variantes, l'un ou ces moteurs pourraient avoir l'axe de leur arbre perpendiculaire à celui de la broche de perçage.

### 6.2. Fonctionnement

Pour réaliser le perçage d'une pièce à percer à un endroit donné de celle-ci, le robot de perçage est piloté de manière à placer la perceuse à vitesse d'avance contrôlée à l'endroit souhaité à partir d'une représentation virtuelle de type CAO de la pièce à percer.

Une fois la perceuse amenée à cet endroit, l'axe du carter logeant la broche de perçage s'étend essentiellement perpendiculairement à la surface d'attaque de la pièce à percer. La perceuse est maintenue dans cette position de façon rigide et fiable par le bras robot.

La perpendicularité relative de l'axe du carter par rapport à la surface d'attaque introduite par la notion d'essentiellement parallèle tient notamment aux différences entre le modèle CAO et les composants réels (pièce à percer, perceuse, robot, positionnement relatif de ces composants entre eux), ainsi qu'à la limite de précision de mouvement du robot.

Le robot est ensuite piloté pour déplacer la perceuse en direction de la surface d'attaque selon l'axe du carter, c'est-à-dire selon un axe essentiellement perpendiculaire la surface d'attaque.

Au cours de ce déplacement, la surface d'appui 3171 de la pièce d'appui 317 vient au contact de la surface d'attaque 41. Sous l'effet de l'effort imprimé par le bras robot selon une direction essentiellement perpendiculairement à la surface d'attaque, la broche de perçage 313 pivote à l'intérieur du carter 312 autour du centre de la liaison rotule LR et s'y incline jusqu'à venir occuper une position dans laquelle l'axe de la broche de perçage 313 s'étend perpendiculairement à la surface d'attaque.

Bien évidemment, pendant la phase d'auto alignement, la broche de perçage est rétractée à l'intérieur du fourreau de sorte que la pointe du foret 5 qui en est solidaire ne dépasse pas de la surface de contact 3171 mais s'en trouve décalée vers l'intérieur du catrer.

L'inclinaison de la broche à l'intérieur du carter est permise par un déplacement des bagues d'excentration de rotation et de translation par rapport à l'entraineur extérieur correspondant, et des entraineurs intérieurs de rotation et de translation par rapport aux bagues d'excentration correspondantes. La broche ainsi que les noix de rotation et d'avance, se trouvent alors désaxées par rapport aux pignons d'avance et de rotation. Ceci est par exemple visible sur les figures 2, 3, 6, 7, 8 et 9.

On obtient ainsi un auto alignement de l'axe de la broche par rapport à la surface d'attaque de la pièce à percer.

L'effort de placage de la perceuse contre la pièce à percer nécessaire pour obtenir un auto alignement convenable dépend notamment :
- du poids et des effets dynamiques s'exerçant sur la broche et son fourreau (ces effets dynamiques sont d'autant plus faibles que la masse des pièces à déplacer pour obtenir l'alignement de la broche de perçage est faible : plus ils sont faibles, moins l'effort de placage à déployer est important ;
- du diamètre de la pièce d'appui 317 : plus ce diamètre est grand, moins l'effort de placage nécessaire sera élevé ;
- des efforts radiaux dans les transmissions entre la broche de perçage et les moyens d'entrainement en rotation et en translation précédemment décrites.

Cet effort de placage sera déterminé expérimentalement avec comme objectifs contradictoires de fiabiliser le positionnement de la broche (auto alignement convenable et stable) et ne pas marquer la pièce à percer.

Un auto alignement est ainsi obtenu au début de chaque perçage.

Le perçage peut ensuite classiquement se poursuivre en pilotant le moteur d'avance 301 et le moteur de mise en rotation 300 de sorte à contrôler la fréquence de rotation et la vitesse d'avance de la broche de perçage.

### 6.3. Variantes

Des moyens pourront être mis en oeuvre pour garantir que l'effort de placage restera dans une plage de valeur prédéterminée pour garantir un auto alignement convenable et stable sans pour autant marquer la pièce à percer.

A titre d'exemples, de tels moyens pourront pas exemple comprendre :
- un système de régulation permettant de mesurer l'effort de placage exercé et de le corriger au besoin en agissant sur les moyens moteurs du robot ;
- un système de liaison glissière muni d'élément élastique intégrée entre le module de perçage et le reste du dispositif de perçage ;
- vérin intégré entre le module de perçage et le reste du dispositif de perçage accompagné d'un système permettant de mesurer l'effort de placage et de réguler le vérin pour le maintenir dans la plage de tolérances.

De tels moyens peuvent également permettre de compenser la variation d'effort de plaquage qui peuvent résulter de vibrations et/ou dilatation des pièces par échauffement au cours d'un perçage.

Un dispositif de blocage de la rotule en position, après que la broche a trouvé son orientation, peut être envisagé pour fiabiliser son maintien en position.

Le mode de réalisation décrit plus concerne la mise en oeuvre de l'invention au sein d'un dispositif de perçage à vitesse d'avance contrôlée. Toutefois, l'invention peut tout aussi bien être mise en oeuvre au sein d'un dispositif de perçage à vitesse d'avance automatique. Dans ce cas, le bloc de transmission mis en oeuvre serait celui d'un dispositif de perçage à vitesse d'avance automatique tel que celui décrit dans le document FR 2 881 366.

Dans le présent document, l'expression « plan passant par l'axe » ne désigne pas que le plan coupe l'axe mais que le plan contient l'axe.

## Revendications

1. Dispositif de perçage (3) à vitesse d'avance automatique ou contrôlée comprenant un carter (312) logeant une broche de perçage (313) destinée à entraîner en mouvement un outil de coupe (5) pour percer une pièce (40) comprenant une surface d'attaque (41),
ladite broche (313) étant inclinable à l'intérieur dudit carter (312) par rapport à l'axe dudit carter (312),
ledit dispositif (3) comprenant des moyens d'auto alignement (314, 317, LR) de ladite broche (313) par rapport à ladite surface d'attaque (41), lesdits moyens d'auto alignement déplaçant ladite broche (313) dans une position dans laquelle son axe est essentiellement perpendiculaire à ladite surface d'attaque (41) sous l'effet d'une application d'un effort de poussée dudit dispositif de perçage (3) contre ladite surface d'attaque (41) essentiellement selon l'axe dudit carter (312),
ledit dispositif (3) comprenant des moyens d'entrainement en rotation (318, 311, 320, 321) et des moyens d'entrainement en translation (319, 310, 322, 323) de ladite broche (313) selon son axe,
**caractérisé en ce que** lesdits moyens d'entrainement comprennent des moyens autorisant le désaxage de ladite broche (313) par rapport audit carter (312).

2. Dispositif de perçage selon la revendication 1 dans lequel ladite broche de perçage (313) est reliée audit carter au moyen d'une liaison rotule (LR).

3. Dispositif de perçage selon la revendication 1 ou 2 dans lequel lesdits moyens d'entrainement en rotation et lesdits moyens d'entrainement en translation comprennent chacun :
- un pignon (310, 311) monté mobile en rotation à l'intérieur dudit carter (312) selon l'axe dudit carter ;
- un entraîneur extérieur (320, 322) lié en rotation audit pignon (310, 311) suivant l'axe de rotation dudit pignon (310, 311) ;
- une bague d'excentration (321, 323) ;
- un entraîneur intérieur (318, 319) lié avec ladite broche (313) en rotation ou au moyen d'une liaison hélicoïdale ;
la bague d'excentration (321, 323) étant liée en rotation audit entraîneur extérieur (320, 322) suivant l'axe de rotation dudit pignon (310, 311) et mobile par rapport audit entraineur extérieur (320, 322) suivant une trajectoire comprise dans un premier plan passant par l'axe de rotation dudit pignon (310, 311) ;
la bague d'excentration (321, 323) étant liée en rotation audit entraîneur intérieur (318, 319) suivant l'axe de rotation de ladite broche (313) et mobile par rapport audit entraîneur intérieur (318, 319) suivant une trajectoire comprise dans un deuxième plan passant par l'axe de rotation de ladite broche (313) ;
les premier et deuxième plans n'étant pas parallèles.

4. Dispositif selon la revendication 3, dans lequel les premier et deuxième plans sont perpendiculaires.

5. Dispositif selon la revendication 3 ou 4 dans lequel :
- lesdits moyens d'entrainement en rotation comprennent une noix de rotation (318), ladite broche (313) étant liée en rotation à ladite noix de rotation (318) et mobile en translation par rapport à celle-ci le long de l'axe de ladite broche (313),
- lesdits moyens d'entrainement en translation comprennent une noix d'avance (319), ladite broche (313) étant liée à ladite noix d'avance (319) par une liaison héliocoïdale,
- ladite noix d'avance (319) et ledit entraîneur intérieur desdits moyens d'entrainement en translation étant liés en rotation ;
- ladite noix de rotation (318) et l'entraineur intérieur desdits moyens d'entrainement en rotation étant lié en rotation.

6. Dispositif selon la revendication 5 dans lequel :
- ladite noix d'avance (319) et ledit entraîneur intérieur desdits moyens d'entrainement en translation forment une unique pièce ;
- ladite noix de rotation (318) et l'entraineur intérieur desdits moyens d'entrainement en rotation forment une unique pièce.

7. Dispositif selon la revendication 6 dans lequel :
- l'entraineur extérieur (320) desdits moyens d'entrainement en rotation et ladite noix de rotation (318) comprennent respectivement deux doigts intérieurs (3202) et deux doigts extérieurs (3181) diamétralement opposés, lesdits doigts intérieurs (3202) coopérant avec deux rainures extérieures (3211) de forme complémentaires ménagées dans ladite bague d'excentration de rotation (321), lesdits doigts extérieurs coopérant (3181) avec deux rainures intérieures (3212) de forme complémentaires ménagées dans ladite bague d'excentration de rotation (321) ;
- l'entraineur extérieur (322) desdits moyens d'entrainement en translation et ladite noix d'avance (319) comprennent respectivement deux doigts intérieurs (3222) et deux doigts extérieurs (3191) diamétralement opposés, lesdits doigts intérieurs (3222) coopérant avec deux rainures extérieures (3231) de forme complémentaires ménagées dans ladite bague d'excentration d'avance (323), lesdits doigts extérieurs (3191) coopérant avec deux rainures intérieures (3232) de forme complémentaires ménagées dans ladite bague d'excentration d'avance (323).

8. Dispositif de perçage selon l'une quelconque des revendications 1 à 7 comprenant un fourreau (314) à l'intérieur duquel ladite broche (313) est montée mobile en translation et en rotation selon son propre axe, ledit fourreau (314) étant inclinable à l'intérieur dudit carter (312) et comprenant à son extrémité tournée vers l'extérieur dudit carter (312) une surface d'appui (3171) destinée être appliquée contre ladite surface d'attaque (41).

9. Dispositif selon l'une quelconque des revendications 1 à 8 comprenant un module de perçage (120) amovible solidarisable de manière réversible audit carter (312), ledit module de perçage (120) comprenant au moins ladite broche (313) et lesdits moyens d'auto alignement de ladite broche (313) par rapport à ladite surface d'attaque (41).

10. Dispositif selon la revendication 9, lesdits entraîneurs extérieurs (320, 322) et lesdits pignons (310, 311) correspondants desdits moyens d'entrainement en rotation et desdits moyens d'entrainement en translation sont liés en rotation suivant l'axe de rotation desdits pignons (310, 311) grâce à des cannelures (3111, 3201, 3101, 3221) ménagées sur lesdits pignons (310, 311) et lesdits entraîneurs (320, 322) et libre en translation suivant l'axe de rotation desdits pignons (310, 311).

11. Module de perçage (120) amovible solidarisable de manière réversible au carter (312) d'un dispositif de perçage (3) à avance automatique ou contrôlée selon l'une quelconque des revendications 1 à 10, ledit module de perçage (120) comprenant ladite broche (313), lesdits moyens d'auto alignement de ladite broche (313) par rapport à ladite surface d'attaque (41), ainsi que lesdits moyens autorisant le désaxage de ladite broche (313) par rapport audit carter (312).

## Patentansprüche

1. Bohrvorrichtung (3) mit automatischer oder kontrollierter Vorschubgeschwindigkeit, umfassend ein Gehäuse (312), das eine Bohrspindel (313) aufnimmt, die dazu bestimmt ist, ein Schneidwerkzeug (5) beweglich anzutreiben, um ein Werkstück (40), das eine Angriffsfläche (41) umfasst, zu bohren,
wobei die Spindel (313) im Inneren des Gehäuses (312) relativ zu der Achse des Gehäuses (312) geneigt werden kann,
wobei die Vorrichtung (3) Selbstausrichtmittel (314, 317, LR) der Spindel (313) relativ zu der Angriffsfläche (41) umfasst, wobei die Selbstausrichtmittel die Spindel (313) in eine Position versetzen, in der ihre Achse, mittels Aufbringens einer Schubkraft der Bohrvorrichtung (3) auf die Angriffsfläche (41) im Wesentlichen entlang der Achse des Gehäuses (312), im Wesentlichen rechtwinklig zu der Angriffsfläche (41) ist,
wobei die Vorrichtung (3) Dreh-Antriebsmittel (318, 311, 320, 321) und Translationsantriebsmittel (319, 310, 322, 323) der Spindel (313) in ihrer Achse umfasst,
**dadurch gekennzeichnet, dass** die Antriebsmittel Mittel umfassen, die eine Achsabweichung der Spindel (313) in Bezug auf das Gehäuse (312) gestatten.

2. Bohrvorrichtung nach Anspruch 1, wobei die Bohrspindel (313) mit dem Gehäuse mit Hilfe einer Gelenkverbindung (LR) verbunden ist.

3. Bohrvorrichtung nach Anspruch 1 oder 2, wobei die Dreh-Antriebsmittel und die Translationsantriebsmittel jeweils umfassen:
- einen Zapfen (310, 311), der drehbeweglich im Inneren des Gehäuses (312) um die Achse des Gehäuses montiert ist;
- einen äußeren Antrieb (320, 322), der mit dem Zapfen (310, 311) der Drehachse des Zapfens (310, 311) folgend drehbeweglich verbunden ist;
- einen Exzenterring (321, 323);
- einen inneren Antrieb (318, 319), der mit der Spindel (313) drehbeweglich oder mittels einer Schraubverbindung verbunden ist;
wobei der Exzenterring (321, 323) mit dem äußeren Antrieb (320, 322) um die Drehachse des Zapfens (310, 311) drehbeweglich verbunden und relativ zu dem äußeren Antrieb (320,322) entlang einer Bahn bewegbar ist, die in einer ersten Ebene liegt, die durch die Drehachse des Zapfens (310, 311) hindurchgeht;
wobei der Exzenterring (321, 323) mit dem inneren Antrieb (318, 319) um die Drehachse der Spindel (313) drehbeweglich verbunden und relativ zu dem inneren Antrieb (318, 319) entlang einer Bahn bewegbar ist, die in einer zweiten Ebene liegt, die durch die Drehachse der Spindel (313) hindurchgeht;
wobei die erste und zweite Ebene nicht parallel sind.

4. Vorrichtung nach Anspruch 3, wobei die erste und zweite Ebene rechtwinklig sind.

5. Vorrichtung nach Anspruch 3 oder 4, wobei:
- die Dreh-Antriebsmittel eine Dreh-Nuss (318) umfassen, wobei die Spindel (313) mit der Dreh-Nuss (318) drehbeweglich verbunden und relativ zu ihr translatorisch entlang der Achse der Spindel (313) beweglich ist,
- die Translationsantriebsmittel eine Vorschub-Nuss (319) umfassen, wobei die Spindel (313) mit der Vorschub-Nuss (319) mittels einer Schraubverbindung verbunden ist,
- die Vorschub-Nuss (319) und der innere Antrieb der Translationsantriebsmittel drehbeweglich verbunden sind;
- die Dreh-Nuss (318) und der innere Antrieb der Dreh-Antriebsmittel drehbeweglich verbunden sind.

6. Vorrichtung nach Anspruch 5, wobei:
- die Vorschub-Nuss (319) und der innere Antrieb der Translationsantriebsmittel ein einziges Stück bilden;
- die Dreh-Nuss (318) und der innere Antrieb der Dreh-Antriebsmittel ein einziges Stück bilden.

7. Vorrichtung nach Anspruch 6, wobei:
- der äußere Antrieb (320) der Dreh-Antriebsmittel und die Dreh-Nuss (318) jeweils zwei innere Finger (3202) und zwei diametral gegenüberliegende äußere Finger (3181) umfassen, wobei die inneren Finger (3202) mit zwei äußeren Rillen (3211) mit komplementärer Form zusammenwirken, die in dem Dreh-Exzenterring (321) aufgenommen sind, wobei die äußeren Finger (3181) mit zwei inneren Rillen (3212) mit komplementärer Form zusammenwirken, die in dem Dreh-Exzenterring (321) aufgenommen sind;
- der äußere Antrieb (322) der Translationsantriebsmittel und die Vorschub-Nuss (319) jeweils zwei innere Finger (3222) und zwei diametral gegenüberliegende äußere Finger (3191) umfassen, wobei die inneren Finger (3222) mit zwei äußeren Rillen (3231) mit komplementärer Form zusammenwirken, die in dem Vorschub-Exzenterring (323) aufgenommen sind, wobei die äußeren Finger (3191) mit zwei inneren Rillen (3232) mit komplementärer Form zusammenwirken, die in dem Vorschub-Exzenterring (323) aufgenommen sind.

8. Bohrvorrichtung nach einem der Ansprüche 1 bis 7, umfassend eine Hülse (314), in deren Innerem die Spindel (313) translatorisch und um ihre eigene Achse montiert drehbeweglich ist, wobei die Hülse (314) im Inneren des Gehäuses (312) geneigt werden kann und an ihrem zu der Außenseite des Gehäuses (312) gerichteten Ende eine Anlagefläche (3171) umfasst, die dazu bestimmt ist, gegen die Angriffsfläche (41) angelegt zu werden.

9. Bohrvorrichtung nach einem der Ansprüche 1 bis 8, umfassend ein abnehmbares Bohrmodul (120), das reversibel an dem Gehäuse (312) befestigbar ist, wobei das Bohrmodul (120) mindestens die Spindel (313) und die Selbstausrichtmittel der Spindel (313) relativ zu der Angriffsfläche (41) umfasst.

10. Vorrichtung nach Anspruch 9, wobei die äußeren Antriebe (320, 322) und die entsprechenden Zapfen (310, 311) der Dreh-Antriebsmittel und der Translationsantriebsmittel um die Drehachse der Zapfen (310, 311) drehbeweglich verbunden sind, aufgrund von Nuten (3111, 3201, 3101, 3221), die an den Zapfen (310, 311) und den Antrieben (320, 322) vorgesehen und translatorisch frei entlang der Drehachse der Zapfen (310, 311) sind.

11. Abnehmbares Bohrmodul (120), welches reversibel an dem Gehäuse (312) einer Bohrvorrichtung (3) mit automatischem oder kontrolliertem Vorschub nach einem der Ansprüche 1 bis 10 befestigbar ist, wobei das Bohrmodul (120) die Spindel (313), die Selbstausrichtmittel der Spindel (313) relativ zu der Angriffsfläche (41) sowie die Mittel umfasst, die eine Achsabweichung der Spindel (313) in Bezug auf das Gehäuse (312) gestatten.

## Claims

1. A drilling device (3) with automatic or controlled feed speed comprising a casing (312) housing a drilling spindle (313) intended to drive a cutting tool (5) in motion to drill a part (40) comprising a target surface (41),
said spindle (313) being tiltable inside said casing (312) with respect to the axis of said casing (312),
said device (3) comprising means (314, 317, LR) for the self-alignment of said spindle (313) with respect to said target surface (41), said means for the self-alignment moving said spindle (313) into a position in which its axis is essentially perpendicular to said target surface (41) under the effect of an application of a thrust force of said drilling device (3) against said target surface (41) essentially according to the axis of said casing (312),
said device (3) comprising rotational drive means (318, 311, 320, 321) and translational drive means (319, 310, 322, 323) of said spindle (313) according to its axis,
**characterised in that** said drive means comprise means enabling offset of said spindle (313) with respect to said casing (312).

2. Drilling device according to claim 1 wherein said drilling spindle (313) is connected to said casing (312) by means of a ball-joint link (LR).

3. Drilling device according to claim 1 or 2 wherein said rotational drive means and said translational drive means each comprise:
- a pinion (310, 311) rotatably mounted within said casing (312) according to the axis of said casing;
- an external driver (320, 322) rotatably linked to said pinion (310, 311) along the axis of rotation of said pinion (310, 311);
- an eccentricity ring (321, 323);
- an internal driver (318, 319) rotatably linked to said spindle (313) or by means of a helical link;
the eccentricity ring (321, 323) being rotatably linked to said external driver (320, 322) along the axis of rotation of said pinion (310, 311) and movable relative to said external driver (320, 322) along a path included in a first plane passing through the axis of rotation of said pinion (310, 311);
the eccentricity ring (321, 323) being rotatably linked to said internal driver (318, 319) along the axis of rotation of said spindle (313) and movable relative to said internal driver (318, 319) along a path included in a second plane passing through the axis of rotation of said spindle (313);
the first and second planes not being parallel.

4. Device according to claim 3, wherein the first and second planes are perpendicular.

5. The device according to claim 3 or 4 wherein:
- said rotational drive means comprise a rotation nut (318), said spindle (313) being rotatably linked to said rotation nut (318) and movable in translation relative thereto along the axis of said spindle (313),
- said translational drive means comprise a feed nut (319), said spindle (313) being linked to said feed nut (319) by a helical link;
- said feed nut (319) and said internal driver of said translational drive means being rotatably linked;
- said rotation nut (318) and the internal driver of said rotational drive means being rotatably linked.

6. Device according to claim 5 wherein:
- said feed nut (319) and said internal driver of said translational drive means form a single part;
- said rotation nut (318) and the internal driver of said rotational drive means form a single part.

7. The device according to claim 6 wherein:
- the external driver (320) of said rotational drive means and said rotation nut (318) respectively comprise two internal fingers (3202) and two external fingers (3181) that are diametrically opposite, said internal fingers (3202) cooperating with the two external grooves (3211) with a complementary shape formed in said rotational eccentricity ring (321), said external fingers (3181) cooperating with two internal grooves (3212) with a complementary shape formed in said rotational eccentricity ring (321);
- the external driver (322) of said translational drive means and said feed nut (319) respectively comprise two internal fingers (3222) and two external fingers (3191) that are diametrically opposite, said internal fingers (3222) cooperating with two external grooves (3231) with a complementary shape formed in said feed eccentricity ring (323), said external fingers (3191) cooperating with two internal grooves (3232) with a complementary shape formed in said feed eccentricity ring (323).

8. Drilling device according to any one of claims 1 to 7 comprising a sleeve (314) inside which said spindle (313) is mounted so as to be movable in translation and in rotation according to its own axis, said sleeve (314) being tiltable towards the inside of said casing (312) and comprising, at its end turned towards the outside of said casing (312), a bearing surface (3171) intended to be applied against said target surface (41).

9. Device according to any one of claims 1 to 8 comprising a removable drilling module (120) reversibly attachable to said casing (312), said drilling module (120) comprising at least said spindle (313) and said means for the self-alignment of said spindle (313) with respect to said target surface (41).

10. Device according to claim 9, said external drivers (320, 322) and said corresponding pinions (310, 311) of said rotational drive means and of said translational drive means are rotatably linked along the axis of rotation of said pinions (310, 311) thanks to splines (3111, 3201, 3101, 3221) formed in said pinions (310, 311) and said drivers (320, 322) and are free in translation along the axis of rotation of said pinions (310, 311).

11. A removable drilling module (120) that is reversibly attachable to the casing (312) of a drilling device (3) with automatic or controlled feed according to any one of claims 1 to 10, said drilling module (120) comprising said spindle (313), said means for the self-alignment of said spindle (313) with respect to said target surface (41), as well as said means enabling offset of said spindle (313) with respect to said casing (312).
